# FASCICULE DE BREVET EUROPEEN

(11) **EP 4 488 893 B1**
(45) Date de publication et mention de la délivrance du brevet: **18.11.2026**
(21) Numéro de dépôt: 24186455.2
(22) Date de dépôt: 04.07.2024
(51) Int. Cl.: G06N 20/20, G06N 5/01, G05B 23/02, G06N 3/045, G06N 3/0475, G06N 20/10

(54) **GÉNÉRATION DE DONNÉES D APPRENTISSAGE POUR L APPRENTISSAGE MACHINE D'UN MODÈLE DE PRÉDICTION D'UN RISQUE DE SURVENUE D'UN ÉVÈNEMENT RARE**
ERZEUGUNG VON TRAININGSDATEN FÜR MASCHINELLES LERNEN EINES VORHERSAGEMODELLS EINES RISIKOS EINES AUFTRETENS EINES SELTENEN EREIGNISSES
GENERATION OF TRAINING DATA FOR MACHINE LEARNING OF A MODEL FOR PREDICTING A RISK OF OCCURRENCE OF A RARE EVENT

(30) Priorité: 05.07.2023 FR 2307150
(43) Date de publication de la demande: 08.01.2025
(73) Titulaire: Commissariat à l'Energie Atomique et aux Energies Alternatives, 75015 Paris (FR)
(72) Inventeur: BERDOUZ QRICHI ANIBA, Hakima, 75014 PARIS (FR)
(74) Mandataire: Lavoix

(56) Documents cités:
- EP-A1- 4 033 421
- FR-A1- 3 098 940

## Description

L'invention concerne un procédé et un dispositif de génération de données d'apprentissage pour l'apprentissage machine d'un modèle de prédiction d'un risque de survenue d'un évènement rare redouté.

L'invention concerne également un procédé et un dispositif d'apprentissage automatique d'un modèle de prédiction d'un risque de survenue d'un évènement rare associé.

Enfin, l'invention concerne des programmes d'ordinateur associés.

L'invention se situe dans le domaine général de la prédiction du risque de survenue d'évènements rares, en particulier la détection précoce de signaux précurseurs aux évènements rares.

Récemment, l'utilisation de l'intelligence artificielle, notamment d'algorithmes de classification ou prédiction entraînés par apprentissage machine, a permis de grandes avancées dans les domaines du diagnostic, de prédiction de pannes, qu'il s'agisse de systèmes industriels, ferroviaires ou de diagnostic précoces permettant de détecter des risques de développer des maladies diverses par des patients.

Cependant, de tels algorithmes d'intelligence artificielle sont performants lorsqu'ils ont été entraînés sur des données d'apprentissage dites annotées ou labélisées, c'est-à-dire, des données d'entrée, contenant des variables ayant des valeurs caractérisant les données surveillées, éventuellement prélevées par successions temporelles, qui sont associées à des classifications connues. Lorsque suffisamment de données d'apprentissage représentatives de chaque classe de sortie possible d'un algorithme de classification sont fournies dans une telle phase d'apprentissage, les paramètres du modèle de classification mis en œuvre par l'algorithme sont calculés, pour assurer la performance de l'algorithme.

Les demandes de brevet FR 3 098 940 A1 et EP4033421 A1 traitent de la détection de risques d'incidents et défaillances.

Intrinsèquement, les données d'apprentissage sont présentes en masse pour des évènements courants, et sont rares et déséquilibrées pour des évènements rares. En d'autres termes la répartition des données d'apprentissage entre données représentatives des évènements courant et données représentatives des évènements rares est déséquilibrée.

Ainsi, dans un cas d'application à un système industriel, de nombreuses données de fonctionnement, par exemple prélevées par des capteurs, sont disponibles, ce qui permet d'obtenir de nombreuses données préalables à la survenue de pannes fréquentes (usure etc) et très peu de données préalables à la survenue de pannes exceptionnelles.

De même, dans le cadre d'un diagnostic d'une maladie rare, les bases de données contiennent peu de données relatives à des patients porteurs de la maladie par rapport aux patients non porteurs de la maladie.

Dans ces cas de figure, on parle de données d'apprentissage déséquilibrées, comportant un premier ensemble de données associées à une absence de survenue d'un évènement rare redouté, et un deuxième ensemble de données associées à une présence de survenue dudit évènement rare, le cardinal du premier ensemble étant très largement supérieur au cardinal du deuxième ensemble, par exemple, le cardinal du premier ensemble étant supérieur à 95% du cardinal total des deux ensembles, et le cardinal du deuxième ensemble étant inférieur à 5% du cardinal total.

Ainsi, les données du deuxième ensemble sont « noyées » dans l'ensemble de données d'apprentissage, et l'algorithme de classification ou prédiction entraîné par apprentissage machine sur de telles données d'apprentissage est moins performant pour la prédiction de l'évènement rare.

Un des objectifs de l'invention est de remédier à ces inconvénients, afin d'améliorer les performances de prédiction de survenue d'évènements rares à partir de bases de données d'apprentissage initialement déséquilibrées.

A cet effet, l'invention propose, selon un aspect, un procédé d'apprentissage automatique d'un modèle de prédiction d'un risque de survenue d'un évènement rare redouté, mettant en œuvre un procédé de génération de données d'apprentissage pour l'apprentissage machine d'un modèle de prédiction d'un risque de survenue d'un évènement rare redouté conforme à la revendication 1.

Avantageusement, le procédé de génération de données d'apprentissage utilisé permet d'obtenir base augmentée de données d'apprentissage, et ainsi, d'obtenir des groupes de données d'apprentissage plus équilibrés. Avantageusement, cela permet d'obtenir une meilleure prédiction de la survenue des évènements rares par application de l'apprentissage automatique d'un modèle ou algorithme de prédiction de l'évènement rare redouté, lorsque les données d'apprentissage équilibrées sont utilisées.

Selon un autre aspect, l'invention concerne un dispositif d'apprentissage automatique d'un modèle de prédiction d'un risque de survenue d'un évènement rare redouté, comportant un dispositif de génération de données d'apprentissage pour l'apprentissage machine d'un modèle de prédiction d'un risque de survenue d'un évènement rare redouté conforme à la revendication 7.

D'autres caractéristiques et avantages de l'invention ressortiront de la description qui en est donnée ci-dessous, à titre indicatif et nullement limitatif, en référence aux figures annexées, parmi lesquelles :
[Fig 1] la figure 1 représente schématiquement un système comportant un dispositif de génération de données d'apprentissage pour l'apprentissage machine d'un modèle de prédiction d'un risque de survenue d'un évènement rare redouté. ;
[Fig 2] la figure 2 est un synoptique des principales étapes d'un procédé de génération de données d'apprentissage selon un premier mode de réalisation ;

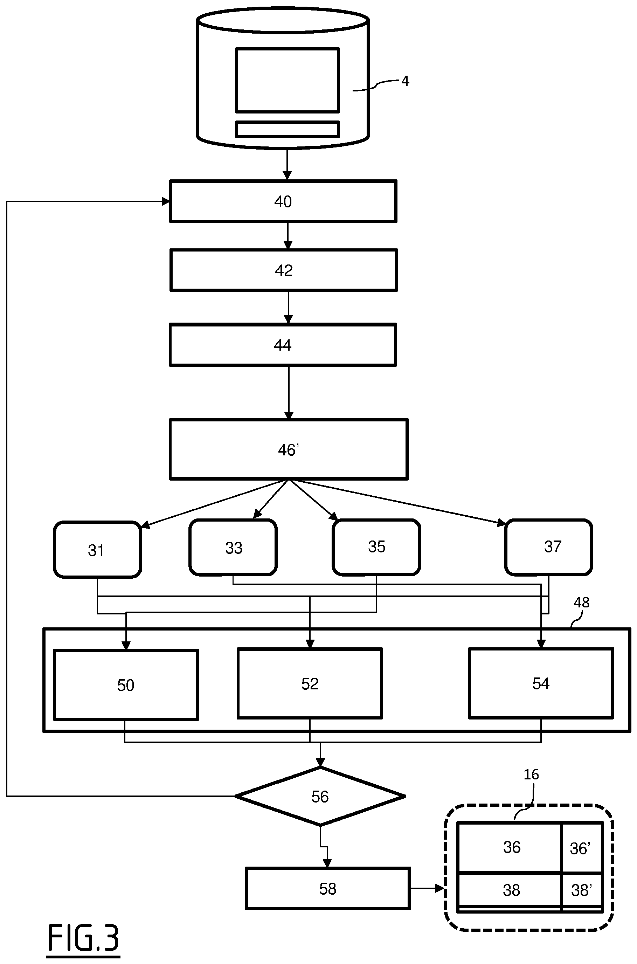

[Fig 3] la figure 3 est un synoptique des principales étapes d'un procédé de génération de données d'apprentissage selon un deuxième mode de réalisation ;
[Fig 4] la figure 4 est un synoptique des principales étapes d'un procédé d'apprentissage machine d'un modèle de prédiction d'un risque de survenue d'un évènement rare redouté et de mise en œuvre dudit modèle de prédiction.

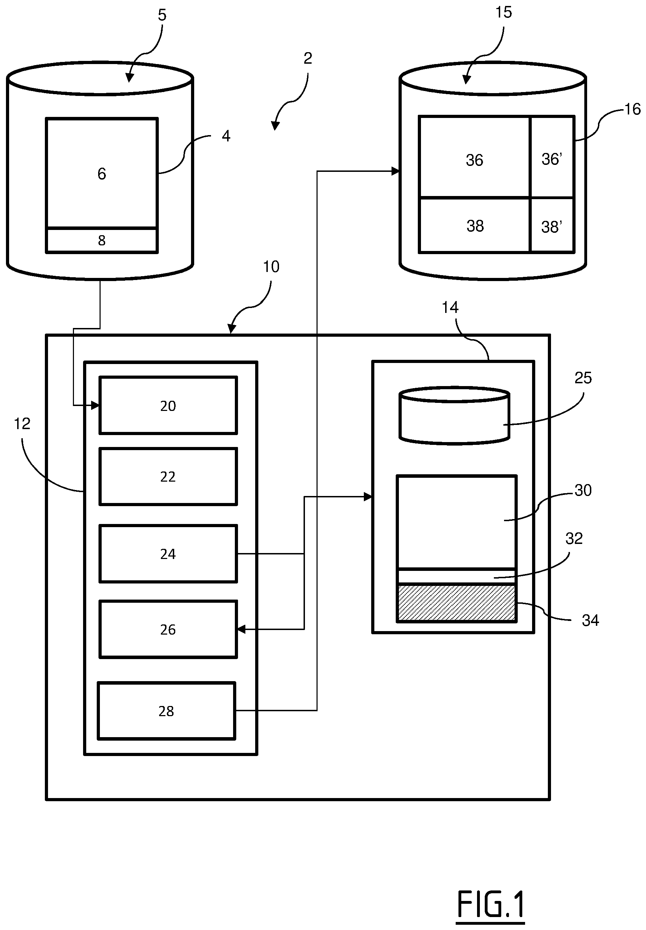

La figure 1 illustre schématiquement un système 2 de génération de données d'apprentissage pour l'apprentissage machine d'un modèle de prédiction d'un risque de survenue d'un évènement rare redouté.

Le système 2 est présenté de manière générique. Les applications d'un tel système sont nombreuses, par exemple pour la prédiction d'un risque de dysfonctionnement exceptionnel d'un système industriel surveillé ou pour le diagnostic du risque d'un patient d'être atteint d'une maladie rare.

D'une manière générale, on appelle système surveillé un système dans lequel l'évènement rare redouté risque de se produire.

Par exemple, dans l'application industrielle, un système surveille est un type d'usine ou un ensemble d'équipements à surveiller.

Dans l'application de diagnostic, le système surveillé est l'organisme d'un patient, à partir de données enregistrées.

Pour la prédiction du risque de survenue d'un évènement rare, il est prévu d'utiliser un modèle de prédiction, qui est entraîné par apprentissage machine sur des données d'apprentissage (ou données d'entrée) représentatives de caractéristiques de systèmes surveillés du même type.

En d'autres termes, pour l'application industriel, par exemple si le système surveillé est une centrale de production d'électricité à charbon, les données d'apprentissage sont des données représentatives d'une, ou de préférence plusieurs, centrales de production d'électricité à charbon, prélevées au cours du temps. De plus, des caractéristiques telles que le type et l'âge des équipements utilisés sont également renseignés.

Par exemple, pour l'application de diagnostic, des données relatives à des patients, par exemple des résultats de tests d'analyse in vitro, et des caractéristiques de patients (e.g. âge, sexe) sont mémorisées.

Il est clair que les données d'apprentissage sont des données adaptées pour l'application visée.

Ces données sont organisées sous forme de vecteurs de variables ayant des valeurs, représentatives d'un état de données de surveillance du système surveillé. En d'autres termes, chaque vecteur est associé à un état d'un système surveillé.

Bien entendu, une pluralité de vecteurs peut être associée à un même système surveillé.

Les valeurs des variables sont fournies par des capteurs et enregistrées au cours du temps (e.g. remontée d'alarme, relevé de mesures de fonctionnement, écart ou anomalie, fait technique).

Les données d'apprentissage sont enregistrées avant la survenue d'un évènement rare redouté, mais pour au moins une partie des données d'apprentissage, la survenue de l'évènement rare a été constatée (i.e. dysfonctionnement redouté ou maladie rare déclarée).

Les données d'apprentissage sont réunies dans une base de données d'apprentissage d'entrée 4, mémorisée dans un système de stockage de données 5.

La base de données 4 comporte un premier ensemble initial 6 de données associées à une absence de survenue dudit évènement rare. Une probabilité d'occurrence de l'évènement rare est également mémorisée, cette probabilité d'occurrence provenant d'une connaissance a priori, par exemple soit de l'avis d'un expert du domaine dans le cas d'un apprentissage supervisé, soit des résultats issus de l'implémentation préalable d'algorithmes de Machine Learning non supervisés, comme l'Association ou le Clustering, qui permet d'associer, ou de réunir dans une même classe, les événements de même probabilité d'occurrence et/ou de même niveau de risque.

La base de données 4 comporte un deuxième ensemble initial 8 de données associées à une présence de survenue dudit évènement rare, i.e. ce sont des données prélevées sur des systèmes surveillés pour lesquels l'évènement rare redouté s'est produit.

Le premier ensemble initial 6 a un cardinal N1 (i.e. comporte N1 vecteurs de variables), le deuxième ensemble initial 8 a un cardinal N2 (i.e. comporte N2 vecteurs de variables).

Dans la base de données 4, le nombre N1 est substantiellement plus élevé que N2, i.e. N2< X/100 x (N1+N2), où X est par exemple inférieur à 10, voire inférieur à 5, et même inférieur à 1.

Un des objectifs du système 2 de génération de données d'apprentissage est de fournir des ensembles de données d'apprentissage mieux équilibrés, de manière à mieux caractériser le risque de survenue de l'évènement rare redouté.

Le système 2 de génération de données d'apprentissage comporte un dispositif 10 de génération de données d'apprentissage, qui est par exemple un dispositif électronique programmable ou une pluralité de dispositifs électroniques programmables interconnectés.

Le dispositif 10 comporte notamment une unité de calcul 12, comportant un ou plusieurs processeurs de calcul, et une mémoire électronique 14, adaptées pour communiquer via un bus de communication de données (non représenté).

Le dispositif 10 est également adapté pour communiquer, en lecture et en écriture, avec le système de stockage de données 5, qui comprend la base de données d'apprentissage d'entrée 4.

De même, le dispositif 10 est également adapté pour communiquer, en lecture et en écriture, avec un système de stockage de données 15, configuré pour mémoriser une base de données d'apprentissage de sortie 16, décrite plus en détail ci-après.

Chacun des systèmes de stockage de données 5, 15 est un support lisible par ordinateur est par exemple, un médium apte à mémoriser les instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique.

Le dispositif 10 comprend les modules suivants, mis en œuvre par l'unité de calcul 10 :
- un module 20 de détermination, à partir des premier et deuxième ensembles initiaux 6, 8 de données, par une méthode d'apprentissage automatique, d'au moins un sous-ensemble de variables associées à un risque de survenue de l'évènement rare supérieur à un seuil de risque, ledit risque étant calculé à partir de valeurs desdites variables ;
- un module 22 génération d'un troisième ensemble de données par variations pseudo-aléatoires sur ledit sous-ensemble de données, et calcul d'un risque associé ;
- un module 24 de regroupement des premier, deuxième et troisième ensemble de données en une base augmentée de données d'apprentissage 25 ;
- un module 26 d'application d'un premier modèle de classification par apprentissage non supervisé sur la base de données augmentée de données d'apprentissage, permettant d'obtenir :
   un premier groupe de données d'apprentissage 30 associées à un risque de survenue de l'évènement rare inférieur à un premier seuil S1;
   un deuxième groupe de données d'apprentissage 32 associées à un risque de survenue de l'évènement rare supérieur à un deuxième seuil S2;
   un troisième groupe de données d'apprentissage 34 associées à un troisième risque, inférieur au deuxième seuil S2 et supérieur au premier seuil S1 ;
- un module 28 d'application d'au moins un deuxième modèle de classification par apprentissage automatique pour reclassifier au moins les données d'apprentissage du troisième groupe 34 dans le premier groupe ou dans le deuxième groupe, et estimation d'une probabilité d'erreur de reclassification associée.

Dans un mode de réalisation, le module 28 met en œuvre trois deuxièmes modèles de classification (également appelés classifieurs) distincts, comprenant un classifieur non supervisé, un classifieur semi-supervisé et un classifieur non-supervisé.

Il est prévu d'utiliser les modules 20, 22, 24, 26 et 28 de manière itérative, jusqu'à ce que la probabilité d'erreur de reclassification soit considérée satisfaisante, i.e. inférieure à un seuil d'erreur prédéterminé.

En sortie est obtenue une base de données d'apprentissage 16 comportant au moins un premier ensemble de sortie de données d'apprentissage 36 et un deuxième ensemble de sortie de données d'apprentissage 38, obtenus après application du module 28, chaque ensemble de sortie 36, 38 ayant un risque de survenue de l'évènement rare redouté, 36', 38' associé. Par exemple, le risque 36' de survenue de l'évènement rare redouté, associé au premier ensemble de sortie 36, est faible, par exemple inférieur à un premier seuil de risque, par exemple inférieur à 15% ou inférieur à 5% de probabilité d'occurrence, , et le risque 38' de survenue de l'évènement rare redouté, associé au deuxième ensemble de sortie 38,est élevé, par exemple supérieur à 55% ou 65% de probabilité d'occurrence.

Avantageusement, le cardinal N'1 du premier ensemble de sortie de données d'apprentissage 36 est inférieur au cardinal N1 du premier ensemble initial 6, et le cardinal N'2 du deuxième ensemble de sortie de données d'apprentissage 38 est supérieur au cardinale N2 du premier ensemble initial 8. En d'autres termes, un ré-équilibrage des données d'apprentissage est effectué, et un risque associé est également calculé. Dans la mesure où les données d'apprentissage sont associées à un risque de survenue de l'évènement rare redouté, la base de données d'apprentissage ré-équilibrée comporte également des informations relatives au risque. On dit également que les données d'apprentissage obtenues sont « informées » du risque de survenue de l'évènement rare redouté.

Dans une variante, plus de deux ensembles de sortie sont obtenus, chacun des ensembles de sortie ayant un risque de survenue de l'évènement rare redouté associé.

Dans un mode de réalisation, les modules 20, 22, 24, 26 et 28 sont réalisés sous forme de code logiciel, et forment un programme d'ordinateur, comportant des instructions logicielles qui, lorsqu'elles sont mises en œuvre par un dispositif électronique programmable, mettent en œuvre un procédé de génération de données d'apprentissage pour l'apprentissage machine d'un modèle de prédiction d'un risque de survenue d'un évènement rare redouté.

En variante non représentée, les modules 20, 22, 24, 26 et 28 sont réalisés chacun sous forme d'un composant logique programmable, tel qu'un FPGA (de l'anglais *Field Programmable Gate Array*)*,* ou un GPGPU (de l'anglais *General-purpose processing on graphics processing*), ou encore sous forme d'un circuit intégré dédié, tel qu'un ASIC (de l'anglais *Application Specific Integrated Circuit*)*.*

Le programme d'ordinateur de génération de données d'apprentissage est en outre apte à être enregistré sur un support, non représenté, lisible par ordinateur. Le support lisible par ordinateur est par exemple, un médium apte à mémoriser les instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique.

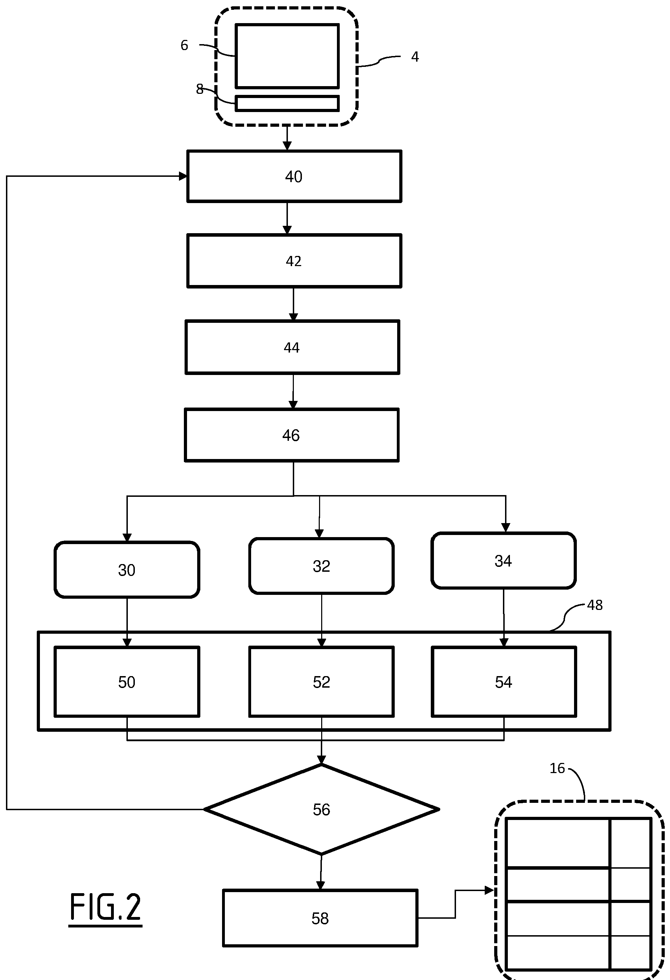

La figure 2 est un synoptique des principales étapes d'un procédé de génération de données d'apprentissage dans un premier mode de réalisation, pour un système surveillé et un évènement rare redouté.

En entrée est fournie la base de données d'apprentissage d'entrée 4, comprenant le premier ensemble initial de données d'apprentissage correspondant à l'absence de survenue de l'évènement rare, et le deuxième ensemble initial de données correspond à la survenue de l'évènement rare.

Chaque ensemble comprend des mêmes types de données, comportant des vecteurs de variables représentatives d'états d'un ou plusieurs système(s) surveillé(s) de même type.

Le procédé comprend une première étape 40, mise en œuvre par le module 20, de détermination à partir desdits premier et deuxième ensembles initiaux de données, par une méthode d'apprentissage automatique, d'au moins un sous-ensemble de variables associées à un risque de survenue dudit évènement rare supérieur à un seuil de risque, ledit risque étant calculé à partir de valeurs desdites variables.

En d'autres termes, l'étape 40 effectue une modélisation assistée par intelligence artificielle de l'exposition au risque.

Par exemple, la méthode d'apprentissage automatique mise en œuvre à l'étape 40 est une méthode d'apprentissage par forêts aléatoires avec bootstrap, technique bien connue d'échantillonnage aléatoire avec remplacement. Avantageusement, cela permet de générer une distribution d'estimations à la place d'une seule estimation ponctuelle, et d'obtenir des valeurs d'incertitude des estimations associées. En variante, l'algorithme XGBoost (pour « eXtreme Gradient Boosting ») est mis en oeuvre.

Selon d'autres variantes, à l'étape 40 est mise en œuvre une régression logistique ou une machine à vecteurs de support ou SVM (de l'anglais « Support Vector Machine »).

L'étape 40 permet de déterminer des états du système surveillé précurseurs de l'évènement rare redouté.

Ces états sont caractérisés par des variables ayant des valeurs données.

Un risque de survenue de l'évènement rare redouté associé est calculé par une formule choisie.

Par exemple, le risque est calculé de la manière suivante: ${Risk}_{Informed} Variable = Occ ∗ {Variable}^{2} ∗ A$
Avec Variable désignant la variable d'intérêt associé à un risque donné (une expression d'oncogène ou un biomarqueur en Santé par exemple) ou bien une variable d'impact (gravité d'une conséquence induite par une anomalie en milieu industriel par exemple) ;
Occ désignant l'occurrence ou la fréquence de réalisation de ce risque, associée à cette variable ;
A désignant la fonction d'atténuation ou d'amplification du risque en fonction de l'état global du système en application industrielle ou l'état de santé globale d'un patient (comorbidités, expositions environnementales et/ou professionnelles à risque ...).

Dans un mode de réalisation, A est un facteur mutliplicatif.

Dans un exemple réalisé sur les données cliniques et génétiques pour la prédiction des patients à haut-risque de développer une forme agressive du cancer du rein à cellules claires, nous avons procédé en 1^{er} lieu à une normalisation logarithmique des expressions de gènes pour ré-équilibrer le poids de chaque gène avec les autres données cliniques disponibles pour assurer une prise en compte équilibrée et une approche prédictive normalisée des algorithmes de Machine Learning de classification.

Dans cet exemple, nous avons introduit et généré pour chaque donnée normalisée initiale (data), une nouvelle donnée associée (data_risk) qui est définie comme une fonction modélisant le risque porté par la donnée initiale, selon la formule suivante : ${data}_{risk} = Occurrence ∗ {data}^{2} ∗ A$

Un seuil de risque prédéterminé est utilisé, dépendant du domaine d'application, par exemple un seuil de risque compris entre 5% et 15% d'un niveau de risque prédéterminé, par exemple maximal, en fonction des recommandations et du retour d'expérience du domaine d'application.

Le procédé comprend ensuite une étape 42 de génération d'un troisième ensemble de données par variations pseudo-aléatoires sur le sous-ensemble de données obtenues à l'étape 40, et calcul d'un risque associé.

Cela permet de générer artificiellement des données correspondant à des états du système surveillé précurseurs de l'évènement rare redouté.

Dans un mode de réalisation, l'étape 42 met en œuvre un algorithme de regroupement (ou « clustering »), par exemple l'algorithme de regroupement en K classes connu sous le nom de « K-means » (ou K-moyennes en français) pour adapter l'introduction de variations pseudo-aléatoires. L'étape 42 permet de trouver des corrélations cachées entre les différents évènements non annotés (ou non-labélisés) en les regroupant dans des classes de risque équivalentes.

Les premier, deuxième ensemble initiaux et le troisième ensemble de données généré à l'étape 42 sont regroupés à l'étape de regroupement 44 en une base augmentée.

Le procédé comprend ensuite une étape 46 d'application d'un premier modèle de classification par apprentissage machine non supervisé sur la base de données augmentée de données d'apprentissage, permettant d'obtenir trois groupes de données d'apprentissage 30, 32, 34 définis précédemment, qui sont respectivement:
un premier groupe de données d'apprentissage 30 associées à un risque de survenue de l'évènement rare inférieur à un premier seuil S1;
un deuxième groupe de données d'apprentissage 32 associées à un risque de survenue de l'évènement rare supérieur à un deuxième seuil S2, le seuil S2 étant supérieur à S1;
un troisième groupe de données d'apprentissage 34 associées à un troisième risque, inférieur au deuxième seuil S2 et supérieur au premier seuil S1.

Par exemple, le seuil S1 est compris entre 5% et 10% de probabilité d'occurrence, le seuil S2 est compris entre 15% et 25% de probabilité d'occurrence.

Différemment de l'apprentissage supervisé, l'apprentissage non supervisé permet à l'algorithme d'apprendre et de prédire avec des exemples non annotés (ou non-labélisés), de manière indépendante. Les algorithmes d'apprentissage non supervisé sont notamment utilisés pour classifier des données, effectuer le calcul de la densité de distribution et ses incertitudes associées, et réduire les dimensions dans le cas d'un grand nombre de variable très supérieurs au nombre d'individu (exemple en Santé, 20.000 gènes pour quelques centaines de patients atteints de cancer).

Par exemple, l'étape 46 met en œuvre une méthode de « clustering » ou « d'association », ce type de méthodes étant des méthodes de référence dans le domaine de l'apprentissage machine non supervisé. D'autres méthodes peuevent également être appliquées, par exemple l'analyse en composantes principales (PCA).

L'étape 46 est suivie d'une étape 48 d'application d'au moins un deuxième modèle de classification (ou classifieur) par apprentissage automatique pour reclassifier les données d'apprentissage, et calculer une probabilité d'erreur de reclassification associée.

Les erreurs de classification sont associées aux incertitudes associées aux données, aux systèmes de collecte et de traitement de données, et aussi aux modèles et algorithmes. A l'état de l'art, plusieurs méthodes permettent d'adresser ce point en déployant la stratégie dite de rééchantillonnage.

On distingue ainsi le sur-échantillonnage (Oversampling) du sous-échantillonnage (Undersampling).

Les méthodes d'Oversampling fonctionnent en augmentant le nombre d'observations de la ou des classes minoritaires afin d'atteindre un ratio classe minoritaire/classe majoritaire satisfaisant.

Les méthodes d'Undersampling fonctionnent en diminuant le nombre d'observations des classes majoritaires jusqu'à atteindre un ratio équilibré.

Il existe plusieurs algorithmes de Machine Learning pour générer des échantillons synthétiques de manière automatique. Le plus populaire de ces algorithmes est SMOTE (pour Synthetic Minority Over-sampling Technique). SMOTE est une méthode de sur-échantillonnage qui fonctionne en créant des échantillons synthétiques à partir de la classe minoritaire au lieu de créer de simples copies.

L'algorithme ClusterCentroids est un algorithme d'Undersampling basé sur des méthodes de Clustering pour générer un certain nombre de centroïdes à partir des données d'origine, sans perte d'information sur la classe majoritaire lors de la réduction de celle-ci.

Dans ce mode de réalisation, l'étape 48 comporte une mise en œuvre sensiblement en parallèle de trois classifieurs distincts aux sous-étapes 50, 52, 54.

Par exemple, la sous-étape 50 met en œuvre un classifieur par apprentissage automatique semi-supervisé, sur les données d'apprentissage du premier groupe et les données d'apprentissage du troisième groupe. L'apprentissage semi-supervisé permet d'entraîner un modèle sur un jeu de données partiellement annoté qui comporte quelques données annotées et une majorité de données non annotées. L'idée est d'attribuer les annotations en utilisant la similarité entre un faible nombre des données annotées et un plus grand volume de données non annotées. Par exemple, la sous-étape 50 met en œuvre un modèle à réseaux antagonistes génératifs (ou GAN pour Generative Adversial Networks).

Par exemple, la sous-étape 52 met en œuvre un classifieur par apprentissage automatique supervisé, par exemple une machine à vecteurs de support (ou SVM pour « Support Vector Machine ») ou une régression logistique, sur les données d'apprentissage du premier groupe et les données d'apprentissage du deuxième groupe.

Par exemple, la sous-étape 54 met en œuvre un classifieur par apprentissage automatique non-supervisé, par exemple un algorithme de Clustering ou d'Association, sur les données d'apprentissage du deuxième groupe et les données d'apprentissage du troisième groupe.

Avantageusement, les classifieurs respectifs sont mis en œuvre de manière indépendante, ce qui permet d'évaluer et de quantifier l'impact des incertitudes afin de les réduire.

Le procédé comporte ensuite une étape 56 de comparaison du minimum de la probabilité d'erreur de reclassification, parmi les trois ensembles, à un seuil d'erreur SP prédéterminé (ou seuil de probabilité d'erreur de reclassification). Si le minimum de la probabilité d'erreur de reclassification est supérieur au seuil d'erreur SP, les étapes 40 à 48 sont itérées.

Sinon, le procédé comprend une étape 58 d'obtention d'au moins deux ensembles 36, 38 de sortie de données d'apprentissage, et de calcul du risque de survenue de l'évènement rare associé.

Dans un deuxième mode de réalisation du procédé de génération de données d'apprentissage pour l'apprentissage machine d'un modèle de prédiction d'un risque de survenue d'un évènement rare redouté, le procédé comporte des étapes 40 à 44 analogues aux étapes décrites ci-dessus.

Différemment du premier mode de réalisation, le procédé comporte une étape 46' d'application d'un premier modèle de classification par apprentissage machine non supervisé sur la base de données augmentée de données d'apprentissage, permettant d'obtenir un nombre G supérieur à 3 de groupes de données d'apprentissage, par exemple un nombre G=4. Chaque groupe de données est associé à une probabilité de risque de survenue de l'évènement rare comprise dans une plage de valeurs, par exemple :
- Un premier groupe de données d'apprentissage 31 associées à un risque de survenue de l'évènement rare compris entre 0% et 25% de probabilité d'occurrence de l'évènement rare ;
- Un deuxième groupe de données d'apprentissage 33 associées à un risque de survenue de l'évènement rare compris entre 25% et 50% de probabilité d'occurrence de l'évènement rare ;
- Un troisième groupe de données d'apprentissage 35 associées à un risque de survenue de l'évènement rare compris entre 50% et 75% de probabilité d'occurrence de l'évènement rare;
- Un quatrième groupe de données d'apprentissage 37 associées à un risque de survenue de l'évènement rare compris entre 75% et 100% de probabilité d'occurrence de l'évènement rare.

On comprend que cela est généralisable à un nombre G quelconque de groupes d'apprentissage.

Le procédé dans le deuxième mode de réalisation comporte alors une étape 48', analogue à l'étape 48 précédemment décrite, d'application d'au moins un deuxième modèle de classification (ou classifieur) par apprentissage automatique pour reclassifier les données d'apprentissage, et calculer une probabilité d'erreur de reclassification associée.

Dans ce mode de réalisation, plusieurs groupes de données d'apprentissage sont fournies en entrées des premier, deuxième et troisième classifieurs 50, 52, 54.

Divers regroupements des groupes de données d'apprentissage fournis en entrée des premier, deuxième et troisième classifieurs sont envisageables, ces regroupements d'entrée étant par exemple effectués en fonction du nombre de données déséquilibrées.

Par exemple, dans le mode de réalisation illustré, les données d'apprentissage du premier groupe 31 et du troisième groupe 35 sont fournies en entrée du premier classifieur, les données d'apprentissage du premier groupe 31 et du quatrième groupe 37 sont fournies en entrée du deuxième classifieur, les données d'apprentissage du deuxième groupe 33 et du quatrième groupe 37 sont fournies en entrée du troisième classifieur.

En variante, d'autres regroupements sont envisagés, en fonction de l'application et/ou des cardinaux respectifs des groupes de données d'apprentissage.

Les étapes 56, 58 suivantes sont analogues aux étapes précédemment décrites en référence à la figure 2.

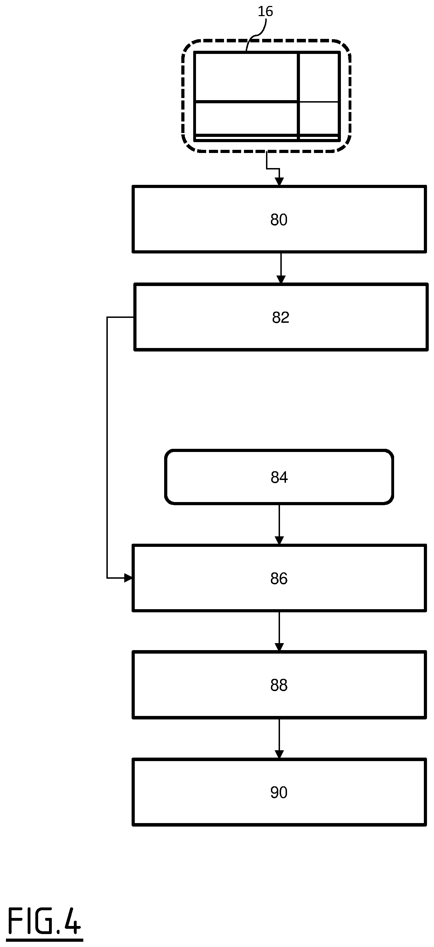

La figure 4 illustre un procédé d'utilisation des données d'apprentissage générées.

Ce procédé comporte une phase d'apprentissage machine du modèle de prédiction et une phase ultérieure d'utilisation pour la prédiction effective du risque de survenue d'un évènement rare dans un système surveillé, par exemple d'un système surveille industriel.

Le procédé comporte, dans la phase d'apprentissage, une réception de la base de données d'apprentissage 16 comportant les au moins deux ensembles 36, 38 de sortie de données d'apprentissage générées par le procédé de génération de données d'apprentissage décrit ci-dessus. Les données d'apprentissage sont bien entendu des données représentatives de caractéristiques de systèmes surveillés d'un type donné, qui ont été équilibrées par le procédé décrit ci-dessus.

Le procédé comporte une étape 80 d'apprentissage machine d'un modèle de prédiction du risque de survenue d'un évènement rare redouté donné sur les données d'apprentissage équilibrées.

Le procédé comprend également une mémorisation 82 du modèle de prédiction, i.e. de son architecture et des valeurs de paramètres le caractérisant.

Le procédé comprend, dans une deuxième phase d'utilisation effective, la fourniture en entrée de données d'entrée 84 caractéristiques d'un système surveillé, pour lesquelles le risque de survenue de l'évènement rare n'est pas connu a priori.

Le procédé comprend alors une étape 86 de mise en œuvre du modèle de prédiction mémorisé à l'étape 82, sur les données d'entrée 84, et l'obtention d'un risque effectif R de survenue de l'évènement rare associé.

Si le risque effectif est supérieur à un seuil de risque critique prédéterminé (étape 88), le procédé comprend la mise en œuvre 90 d'une action de prévention : par exemple, s'agissant d'un système industriel surveillé, un envoi d'alerte, avec le cas échéant des informations associées, permettant de déterminer des actions préventives : maintenance prédictive, mise en arrêt d'équipement ciblés etc.

Le seuil de risque critique est défini en fonction de l'application.

Le procédé d'utilisation des données d'apprentissage est mis en œuvre par un ou plusieurs dispositifs électroniques programmables.

Par exemple, le procédé est mis en œuvre par un dispositif électronique programmable analogue matériellement au dispositif 10 de génération de données d'apprentissage, qui comporte en outre un module d'apprentissage des valeurs du modèle de prédiction mettant en œuvre les données d'apprentissage obtenues, et/ou un module de mise en œuvre du modèle de prédiction mémorisé, et un module d'application d'une action de prévention suite à la détermination d'un risque effectif supérieur à un seuil de risque critique.

Avantageusement, l'invention propose ainsi un dispositif et un procédé automatisés d'équilibrage de données déséquilibrées par génération de nouvelles données, informées du risque (en anglais « Risk-informed »), i.e. mémorisées en association avec une valeur de risque associée, pour l'apprentissage automatique d'un modèle ou algorithme de prédiction de l'exposition à un évènement rare redouté.

Avantageusement, les inventeurs ont montré que le score de performance caractérisant la performance des algorithmes (ou modèles) de prédiction entraînés par apprentissage machine, par exemple le F1-score, qui évalue la capacité d'un modèle de classification de prédire efficacement les individus positifs en faisant un compromis entre la précision et le rappel (ou recall) est systématiquement amélioré lorsque la base de données d'apprentissage équilibrée est utilisée.

## Revendications

1. Procédé d'apprentissage automatique d'un modèle de prédiction d'un risque de survenue d'un évènement rare redouté, mettant en œuvre un procédé de génération de données d'apprentissage pour l'apprentissage machine dudit modèle de prédiction d'un risque de survenue d'un évènement rare redouté, lesdites données d'apprentissage étant formées de vecteurs de variables fournies par des capteurs et représentatives d'un état de fonctionnement d'un système industriel surveillé avant la survenue dudit évènement rare redouté,
à partir de données d'apprentissage d'entrée (4) comportant un premier ensemble initial (6) de données associées à une absence de survenue dudit évènement rare, et un deuxième ensemble initial (8) de données associées à une présence de survenue dudit évènement rare, le procédé comportant des étapes, mises en œuvre par au moins un processeur de calculs, de :
- A) détermination (40), à partir desdits premier et deuxième ensembles initiaux de données, par une méthode d'apprentissage automatique, d'au moins un sous-ensemble de variables associées à un risque de survenue dudit évènement rare supérieur à un seuil de risque, ledit risque étant calculé à partir des valeurs desdites variables,
- B) génération (42) d'un troisième ensemble de données par variations pseudo-aléatoires sur ledit au moins un sous-ensemble de données, et calcul d'un risque associé,
- C) regroupement (44) desdits premier, deuxième et troisième ensemble de données en une base augmentée de données d'apprentissage,
- D) application (46) d'un premier modèle de classification par apprentissage non supervisé sur la base augmentée de données d'apprentissage, permettant d'obtenir au moins trois groupes(30, 32, 34 ; 31, 33, 35, 37) de données d'apprentissage, comprenant un premier groupe (30) de données d'apprentissage associées à un risque de survenue dudit évènement rare inférieur à un premier seuil ; un deuxième groupe (32) de données d'apprentissage associées à un risque de survenue dudit évènement rare supérieur à un deuxième seuil ; un troisième groupe (34) de données d'apprentissage associées à un troisième risque, inférieur au deuxième seuil et supérieur au premier seuil,
- le procédé comportant en outre une étape d'apprentissage (80) des valeurs du modèle de prédiction mettant en œuvre les données d'apprentissage obtenues par le procédé de génération de données d'apprentissage, et
- une étape de mise en œuvre (86) du modèle de prédiction ainsi entraîné pour déterminer un risque effectif, un déclenchement d'une mise en arrêt ou d'une maintenance prédictive d'équipement dudit système industriel surveillé étant effectué si ledit risque effectif dépasse (88) un seuil de risque critique prédéterminé.

2. Procédé selon la revendication 1, comportant en outre une étape E) d'application (48) d'au moins un deuxième modèle de classification par apprentissage automatique pour reclassifier au moins les données d'apprentissage du troisième groupe dans le premier groupe ou dans le deuxième groupe, et estimation d'une probabilité d'erreur de reclassification associée, le premier groupe de données d'apprentissage ainsi obtenu formant un premier ensemble de sortie de données d'apprentissage (36) et le deuxième groupe de données d'apprentissage ainsi obtenu formant un deuxième ensemble de sortie de données d'apprentissage (38).

3. Procédé selon la revendication 2, dans lequel l'étape E) comporte l'application (48) d'une pluralité de deuxièmes modèles de classification dit classifieurs :
application (50) d'un classifieur par apprentissage semi-supervisé sur les données d'apprentissage du premier groupe et les données d'apprentissage du troisième groupe,
application (52) d'un classifieur par apprentissage supervisé sur les données d'apprentissage du premier groupe et les données d'apprentissage du deuxième groupe et
application (54) d'un classifieur par apprentissage non supervisé sur les données d'apprentissage du deuxième groupe et les données d'apprentissage du troisième groupe.

4. Procédé selon la revendication 2 ou 3, dans lequel si ladite probabilité d'erreur de reclassification est supérieure à un seuil d'erreur, les étapes A) à D) sont itérées, ledit premier groupe de données d'apprentissage formant le premier ensemble initial de données et ledit deuxième groupe de données d'apprentissage formant ledit deuxième ensemble initial de données pour une itération suivante.

5. Procédé selon l'une des revendications 1 à 4, dans lequel à l'étape A) de détermination est appliquée une méthode d'apprentissage automatique par forêts aléatoires.

6. Programme d'ordinateur comportant des instructions logicielles qui, lorsqu'elles sont exécutées par un dispositif programmable, mettent en œuvre un procédé d'apprentissage automatique conforme aux revendications 1 à 5.

7. Dispositif d'apprentissage automatique d'un modèle de prédiction d'un risque de survenue d'un évènement rare redouté, comportant un dispositif de génération de données d'apprentissage pour l'apprentissage machine dudit modèle de prédiction d'un risque de survenue d'un évènement rare redouté, lesdites données d'apprentissage étant formées de vecteurs de variables fournies par des capteurs et représentatives d'un état de fonctionnement d'un système industriel surveillé avant la survenue dudit évènement rare redouté, à partir de données d'apprentissage d'entrée (4) comportant un premier ensemble initial (6) de données associées à une absence de survenue dudit évènement rare, et un deuxième ensemble initial (8) de données associées à une présence de survenue dudit évènement rare, le dispositif comportant au moins un processeur de calculs configuré pour mettre en œuvre:
- un module (20) de détermination, à partir desdits premier et deuxième ensembles initiaux de données, par une méthode d'apprentissage automatique, d'au moins un sous-ensemble de variables associées à un risque de survenue dudit évènement rare supérieur à un seuil de risque, ledit risque étant calculé à partir des valeurs desdites variables,
- un module (22) de génération d'un troisième ensemble de données par variations pseudo-aléatoires sur ledit au moins un sous-ensemble de données, et calcul d'un risque associé,
- un module (24) de regroupement desdits premier, deuxième et troisième ensemble de données en une base augmentée de données d'apprentissage,
- un module (26) d'application d'un premier modèle de classification par apprentissage non supervisé sur la base augmentée de données d'apprentissage, permettant d'obtenir au moins trois groupes de données d'apprentissage, comprenant un premier groupe de données d'apprentissage associées à un risque de survenue dudit évènement rare inférieur à un premier seuil ; un deuxième groupe de données d'apprentissage associées à un risque de survenue dudit évènement rare supérieur à un deuxième seuil ; un troisième groupe de données d'apprentissage associées à un troisième risque, inférieur au deuxième seuil et supérieur au premier seuil, comportant en outre un module d'apprentissage des valeurs du modèle de prédiction mettant en œuvre les données d'apprentissage obtenues par ledit dispositif de génération de données d'apprentissage, le dispositif étant en outre configuré pour mettre en œuvre le modèle de prédiction ainsi entraîné pour déterminer un risque effectif, un déclenchement d'une mise en arrêt ou d'une maintenance prédictive d'équipement dudit système industriel surveillé étant effectué si ledit risque effectif dépasse un seuil de risque critique prédéterminé,

8. Dispositif selon la revendication 7, comportant en outre un module (28) d'application d'au moins un deuxième modèle de classification par apprentissage automatique pour reclassifier au moins les données d'apprentissage du troisième groupe dans le premier groupe ou dans le deuxième groupe, et estimation d'une probabilité d'erreur de reclassification associée, le premier groupe de données d'apprentissage ainsi obtenu formant un premier ensemble de sortie de données d'apprentissage (36) et le deuxième groupe de données d'apprentissage ainsi obtenu formant un deuxième ensemble de sortie de données d'apprentissage (38).

## Patentansprüche

1. Verfahren zum maschinellen Lernen eines Vorhersagemodells für ein Risiko des Auftretens eines befürchteten seltenen Ereignisses, bei dem ein Verfahren zur Erzeugung von Trainingsdaten für das maschinelle Lernen des genannten Vorhersagemodells für ein Risiko des Auftretens eines befürchteten seltenen Ereignisses implementiert wird, wobei die genannten Trainingsdaten aus Vektoren von Variablen gebildet sind, die von Sensoren geliefert werden und für einen Betriebszustand eines überwachten industriellen Systems vor dem Auftreten des genannten befürchteten seltenen Ereignisses repräsentativ sind,
ausgehend von Eingangstrainingsdaten (4), die eine erste Ausgangsmenge (6) von Daten, die einem Ausbleiben des Auftretens des genannten seltenen Ereignisses zugeordnet sind, und eine zweite Ausgangsmenge (8) von Daten, die einem Vorliegen des Auftretens des genannten seltenen Ereignisses zugeordnet sind, umfassen, wobei das Verfahren Schritte umfasst, die durch mindestens einen Rechenprozessor implementiert werden, nämlich:
- A) Bestimmung (40), ausgehend von den genannten ersten und zweiten Ausgangsmengen von Daten, durch ein Verfahren des maschinellen Lernens, mindestens einer Teilmenge von Variablen, die einem Risiko des Auftretens des genannten seltenen Ereignisses zugeordnet sind, das höher als ein Risikoschwellenwert ist, wobei das genannte Risiko aus den Werten der genannten Variablen berechnet wird,
- B) Erzeugung (42) eines dritten Datensatzes durch pseudozufällige Variationen an der genannten mindestens einen Teilmenge von Daten, und Berechnung eines zugeordneten Risikos,
- C) Zusammenfassung (44) der genannten ersten, zweiten und dritten Datensätze zu einer erweiterten Basis von Trainingsdaten,
- D) Anwendung (46) eines ersten Klassifikationsmodells durch unüberwachtes Lernen auf die erweiterte Basis von Trainingsdaten, wodurch mindestens drei Gruppen (30, 32, 34; 31, 33, 35, 37) von Trainingsdaten erhalten werden können, umfassend eine erste Gruppe (30) von Trainingsdaten, die einem Risiko des Auftretens des genannten seltenen Ereignisses unterhalb eines ersten Schwellenwerts zugeordnet sind ; eine zweite Gruppe (32) von Trainingsdaten, die einem Risiko des Auftretens des genannten seltenen Ereignisses oberhalb eines zweiten Schwellenwerts zugeordnet sind ; eine dritte Gruppe (34) von Trainingsdaten, die einem dritten Risiko zugeordnet sind, das unterhalb des zweiten Schwellenwerts und oberhalb des ersten Schwellenwerts liegt,
- wobei das Verfahren ferner einen Schritt des Trainierens (80) der Werte des Vorhersagemodells umfasst, bei dem die durch das Verfahren zur Erzeugung von Trainingsdaten erhaltenen Trainingsdaten implementiert werden, und
- einen Schritt der Implementierung (86) des so trainierten Vorhersagemodells zur Bestimmung eines tatsächlichen Risikos, wobei eine Auslösung einer Stillsetzung oder einer vorausschauenden Wartung von Ausrüstung des genannten überwachten industriellen Systems erfolgt, wenn das genannte tatsächliche Risiko einen vorbestimmten kritischen Risikoschwellenwert überschreitet (88).

2. Verfahren nach Anspruch 1, ferner umfassend ein Schritt E) der Anwendung (48) mindestens eines zweiten Klassifikationsmodells durch maschinelles Lernen, um mindestens die Trainingsdaten der dritten Gruppe in die erste Gruppe oder in die zweite Gruppe neu zu klassifizieren, und Schätzung einer zugeordneten Fehlerwahrscheinlichkeit der Neuklassifikation, wobei die so erhaltene erste Gruppe von Trainingsdaten einen ersten Ausgabedatensatz von Trainingsdaten (36) bildet und die so erhaltene zweite Gruppe von Trainingsdaten einen zweiten Ausgabedatensatz von Trainingsdaten (38) bildet.

3. Verfahren nach Anspruch 2, bei dem der Schritt E) die Anwendung (48) einer Vielzahl von zweiten Klassifikationsmodellen, Klassifikatoren genannt, umfasst : Anwendung (50) eines Klassifikators durch semiüberwachtes Lernen auf die Trainingsdaten der ersten Gruppe und die Trainingsdaten der dritten Gruppe, Anwendung (52) eines Klassifikators durch überwachtes Lernen auf die Trainingsdaten der ersten
Gruppe und die Trainingsdaten der zweiten Gruppe und Anwendung (54) eines Klassifikators durch unüberwachtes Lernen auf die Trainingsdaten der zweiten Gruppe und die Trainingsdaten der dritten Gruppe.

4. Verfahren nach Anspruch 2 oder 3, bei dem, wenn die genannte Fehlerwahrscheinlichkeit der Neuklassifikation höher als ein Fehlerschwellenwert ist, die Schritte A) bis D) iteriert werden, wobei die genannte erste Gruppe von Trainingsdaten die erste Ausgangsmenge von Daten bildet und die genannte zweite Gruppe von Trainingsdaten die genannte zweite Ausgangsmenge von Daten für eine folgende Iteration bildet.

5. Verfahren nach einem der Ansprüche 1 bis 4, bei dem im Schritt A) der Bestimmung ein Verfahren des maschinellen Lernens durch Random Forests angewendet wird.

6. Computerprogramm, umfassend Softwareanweisungen, die, wenn sie von einer programmierbaren Vorrichtung ausgeführt werden, ein Verfahren zum maschinellen Lernen nach den Ansprüchen 1 bis 5 implementieren.

7. Vorrichtung zum maschinellen Lernen eines Vorhersagemodells für ein Risiko des Auftretens eines befürchteten seltenen Ereignisses, umfassend eine Vorrichtung zur Erzeugung von Trainingsdaten für das maschinelle Lernen des Vorhersagemodells für ein Risiko des Auftretens eines befürchteten seltenen Ereignisses, wobei die genannten Trainingsdaten aus Vektoren von Variablen gebildet sind, die von Sensoren geliefert werden und für einen Betriebszustand eines überwachten industriellen Systems vor dem Auftreten des genannten befürchteten seltenen Ereignisses repräsentativ sind, ausgehend von Eingangstrainingsdaten (4), die eine erste Ausgangsmenge (6) von Daten, die einem Ausbleiben des Auftretens des genannten seltenen Ereignisses zugeordnet sind, und eine zweite Ausgangsmenge (8) von Daten, die einem Vorliegen des Auftretens des genannten seltenen Ereignisses zugeordnet sind, umfassen, wobei die Vorrichtung mindestens einen Rechenprozessor umfasst, der dazu konfiguriert ist, zu implementieren :
- ein Modul (20) zur Bestimmung, ausgehend von den genannten ersten und zweiten Ausgangsmengen von Daten, durch ein Verfahren des maschinellen Lernens, mindestens einer Teilmenge von Variablen, die einem Risiko des Auftretens des genannten seltenen Ereignisses zugeordnet sind, das höher als ein Risikoschwellenwert ist, wobei das genannte Risiko aus den Werten der genannten Variablen berechnet wird,
- ein Modul (22) zur Erzeugung eines dritten Datensatzes durch pseudozufällige Variationen an der genannten mindestens einen Teilmenge von Daten, und Berechnung eines zugeordneten Risikos,
- ein Modul (24) zur Zusammenfassung der genannten ersten, zweiten und dritten Datensätze zu einer erweiterten Basis von Trainingsdaten,
- ein Modul (26) zur Anwendung eines ersten Klassifikationsmodells durch unüberwachtes Lernen auf die erweiterte Basis von Trainingsdaten, wodurch mindestens drei Gruppen von Trainingsdaten erhalten werden können, umfassend eine erste Gruppe von Trainingsdaten, die einem Risiko des Auftretens des genannten seltenen Ereignisses unterhalb eines ersten Schwellenwerts zugeordnet sind ; eine zweite Gruppe von Trainingsdaten, die einem Risiko des Auftretens des genannten seltenen Ereignisses oberhalb eines zweiten Schwellenwerts zugeordnet sind ; eine dritte Gruppe von Trainingsdaten, die einem dritten Risiko zugeordnet sind, das unterhalb des zweiten Schwellenwerts und oberhalb des ersten Schwellenwerts liegt, ferner umfassend ein Modul zum Trainieren der Werte des Vorhersagemodells, bei dem die durch die genannte Vorrichtung zur Erzeugung von Trainingsdaten erhaltenen Trainingsdaten implementiert werden, wobei die Vorrichtung ferner dazu konfiguriert ist, das so trainierte Vorhersagemodell zu implementieren, um ein tatsächliches Risiko zu bestimmen, wobei eine Auslösung einer Stillsetzung oder einer vorausschauenden Wartung von Ausrüstung des genannten überwachten industriellen Systems erfolgt, wenn das genannte tatsächliche Risiko einen vorbestimmten kritischen Risikoschwellenwert überschreitet,

8. Vorrichtung nach Anspruch 7, ferner umfassend ein Modul (28) zur Anwendung mindestens eines zweiten Klassifikationsmodells durch maschinelles Lernen, um mindestens die Trainingsdaten der dritten Gruppe in die erste Gruppe oder in die zweite Gruppe neu zu klassifizieren, und Schätzung einer zugeordneten Fehlerwahrscheinlichkeit der Neuklassifikation, wobei die so erhaltene erste Gruppe von Trainingsdaten einen ersten Ausgabedatensatz von Trainingsdaten (36) bildet und die so erhaltene zweite Gruppe von Trainingsdaten einen zweiten Ausgabedatensatz von Trainingsdaten (38) bildet.

## Claims

1. A method of machine learning of a model for predicting a risk of occurrence of a feared rare event, implementing a method for generating training data for machine learning of said model for predicting a risk of occurrence of a feared rare event, said training data being formed by vectors of variables provided by sensors and representative of a functioning state of an industrial system monitored before the occurrence of said feared rare event,
from input training data (4) including a first initial set (6) of data associated with an absence of occurrence of said rare event, and a second initial set (8) of data associated with a presence of occurrence of said rare event, the method including steps, implemented by at least one computer processor, of:
- A) determination (40), from said first and second initial datasets, by a machine learning method, of at least one subset of variables associated with a risk of occurrence of said rare event higher than a risk threshold, said risk being calculated from the values of said variables,
- B) generation (42) of a third set of data by pseudo-random variations on said at least one subset of data, and calculation of an associated risk,
- C) grouping (44) said first, second and third datasets into an augmented training database,
- D) application (46) of a first classification model by unsupervised learning based on augmented training data, resulting in at least three groups (30, 32, 34; 31, 33, 35, 37) of training data, comprising a first group (30) of training data associated with a risk of occurrence of said rare event lower than a first threshold; a second group (32) of training data associated with a risk of occurrence of said rare event higher than a second threshold; a third group (34) of training data associated with a third risk, lower than the second threshold and higher than the first threshold,
- the method further comprising a step (80) of learning the values of the prediction model using training data obtained by the method for generating training data, and
- -a step (86) of implementing the trained prediction model to determine an effective risk, and triggering a shutdown or a predictive maintenance of an equipment of said monitored industrial system if the effective risk is higher than a predetermined critical risk threshold.

2. The method according claim 1, further including a step E) of application (48) of at least one second machine learning classification model to reclassify at least the training data of the third group into the first group or into the second group, and estimation of an associated reclassification error probability, the first group of training data thereby obtained forming a first output set of training data (36) and the second group of training data thereby obtained forming a second output set of training data (38).

3. The method according to claim 2, wherein step E) includes the application (48) of a plurality of second classifier models: application (50) of a semi-supervised learning classifier to the training data of the first group and the training data of the third group, application (52) of a supervised learning classifier to the training data of the first group and the training data of the second group and application (54) of an unsupervised learning classifier to the training data of the second group and the training data of the third group.

4. The method according to claim 2 or 3, wherein if said reclassification error probability is higher than an error threshold, steps A) to D) are iterated, said first group of training data forming the first initial set of data and said second group of training data forming said second initial set of data for a subsequent iteration.

5. The method according to one of claims 1 to 4, in which a random forest machine learning method is applied in the determining step A).

6. A computer program including software instructions which, when executed by a programmable device, implement a machine learning method according to any of claims 1 to 5.

7. A device for automatic learning of a model for predicting a risk of occurrence of a feared rare event, comprising a device for generating training data for machine learning of said model for predicting a risk of occurrence of a feared rare event, said training data being formed by vectors of variables provided by sensors and representative of a functioning state of an industrial system monitored before the occurrence of said feared rare event, from input training data (4) including a first initial set (6) of data associated with an absence of occurrence of said rare event, and a second initial set (8) of data associated with an occurrence of said rare event, the device including at least one calculation processor configured to implement:
- a module (20) for determining, from said first and second initial sets of data, by a machine learning method, at least one subset of variables associated with a risk of occurrence of said rare event higher than a risk threshold, said risk being calculated from the values of said variables,
- a module (22) for generating a third set of data by pseudo-random variations on said at least one subset of data, and calculation of an associated risk,
- a module (24) for grouping said first, second and third datasets into an augmented training database,
- a module (26) for applying a first classification model by unsupervised learning on the augmented training database, serving to obtain at least three groups of training data, comprising a first group of training data associated with a risk of occurrence of said rare event lower than a first threshold; a second group of training data associated with a risk of occurrence of said rare event higher than a second threshold; a third group of training data associated with a third risk, lower than the second threshold and higher than the first threshold, further comprising a module for learning the values of the prediction model implementing the training data obtained by said device for generating training data, the device being further configured to implement the trained prediction model to determine an effective risk, and trigger a shutdown or a predictive maintenance of an equipment of said monitored industrial system if the effective risk is higher than a predetermined critical risk threshold.

8. A device according to claim 7, further comprising a module (28) for applying at least one second machine learning classification model to reclassify at least the training data of the third group into the first group or into the second group, and estimating an associated reclassification error probability, the first training data group thus obtained forming a first output set of training data(36) and the second training data group thus obtained forming a second output set of training data (38).
